# EUROPÄISCHE PATENTSCHRIFT

(11) **EP 1 106 452 B1**
(45) Veröffentlichungstag und Bekanntmachung des Hinweises auf die Patenterteilung: **16.11.2005**
(21) Anmeldenummer: 00120101.1
(22) Anmeldetag: 18.09.2000
(51) Int. Cl.: B60R 25/02

(54) **Lenkschloss für Kraftfahrzeug**
Steering lock for a vehicle
Verrou de direction pour véhicules

(30) Priorität: 30.11.1999 DE 19957546
(43) Veröffentlichungstag der Anmeldung: 13.06.2001
(73) Patentinhaber: Huf Hülsbeck & Fürst GmbH & Co. KG, 42551 Velbert (DE)
(72) Erfinder: Landmann, Alfred, 82216 Maisach (DE); Müller, Ulrich, Dipl.-Ing., 42549 Velbert (DE)
(74) Vertreter: Oedekoven, Wolf Dieter

(56) Entgegenhaltungen:
- DE-A- 3 008 484
- DE-A- 3 318 359
- DE-A- 3 344 411

## Beschreibung

Die Erfindung betrifft ein Lenkschloß für Kraftfahrzeuge mit einem Sperrglied zum Sperren der Kraftfahrzeug-Lenkspindel gegen Drehen und mit einem Rotor, welcher zum Hin- und Herbewegen des Sperrgliedes zwischen einer Lenkspindel-Sperrstellung und einer Lenkspindel-Freigabestellung in einem Stator aus einer Ausgangsstellung und zurück in die Ausgangsstellung drehbar ist, wobei der Rotor nur dann in die Ausgangsstellung zurückgedreht werden kann, wenn das Kraftfahrzeug stillsteht und gegen Wegrollen gesichert ist und wenn daraufhin ein am Stator vorgesehener Elektromagnet erregt wird, um die entsprechende Drehsperre des Rotors aufzuheben.

Derartige Kraftfahrzeug-Lenkschlösser sind bekannt. Dabei wird der mittels eines Schlüssels drehbare Rotor durch einen axial verschieblichen Sperrstift (US-A-3 859 828, DE-A-30 08 484, GB-A-2 211 545, DE-U-88 02 327, EP-B-0 706 919) oder eine schwenkbare Sperrwippe (DE-C-43 32 478) beim Rückdrehen in die Ausgangsstellung vor Erreichen derselben gesperrt, welcher bzw. welche am Stator beweglich gelagert, in die Rotor-Sperrstellung (oder die Rotor-Freigabestellung) federbelastet und mittels des Elektromagneten entgegen der Wirkung der Federbelastung in die Rotor-Freigabestellung (oder die Rotor-Sperrstellung) bewegbar ist.

Bekannt ist auch ein elektronisches Lenkschloß für Kraftfahrzeuge, welches mittels eines elektronischen Schlüssels entriegelbar ist und ein Sperrglied zum Sperren der Kraftfahrzeug-Lenkspindel gegen Drehen sowie einen Rotor aufweist, der zum Hin- und Herbewegen des Sperrgliedes zwischen einer Lenkspindel-Sperrstellung und einer Lenkspindel-Freigabestellung in einem Stator aus einer Ausgangsstellung und zurück in die Ausgangsstellung drehbar ist, wobei der Rotor erst dann aus der Ausgangsstellung gedreht werden kann, so daß das Sperrglied sich in die Lenkspindel-Freigabestellung bewegt, wenn ein Identifizierungssignal des elektronischen Schlüssels als richtig erkannt und ein im Stator koaxial zum Rotor angeordneter Elektromagnet erregt worden ist, um den Rotor zu entriegeln. Der Rotor ist als von Hand drehbares Betätigungsglied ausgebildet, welches im Stator drehbar, aber axial unbeweglich gelagert ist, an dem einen Ende aus dem Stator ragt und mit einem Handgriff versehen ist, an dem anderen Ende einen mit dem Sperrglied zusammenwirkenden Exzenter aufweist und in seiner Ausgangsstellung im Stator durch eine Sperrhülse verriegelt wird, die das Betätigungssglied umschließt und im Elekromagneten axial verschieblich, aber drehfest gelagert und in die Betätigungsglied-Verriegelungsstellung federbelastet ist, in welcher ein Längsschlitz der Sperrhülse einen radialen Vorsprung des Betätigungsgliedes aufnimmt und aus welcher die Sperrhülse mittels des Elektromagneten entgegen der Wirkung der Federbelastung in die Betätigungsglied-Entriegelungsstellung bewegbar ist, in welcher der radiale Vorsprung des Betätigungsgliedes den Längsschlitz der Sperrhülse verlassen hat (DE-A-33 44 411).

Der Erfindung liegt die Aufgabe zugrunde, ein Lenkschloß für Kraftfahrzeuge der im Oberbegriff des Patentanspruchs 1 angegebenen Gattung zu schaffen, welches einfach aufgebaut ist, kostengünstig hergestellt werden kann und sich durch geringen Platzbedarf sowie hohe Diebstahlsicherheit auszeichnet.

Diese Aufgabe ist durch die im kennzeichnenden Teil des Patentanspruchs 1 aufgeführten Merkmale gelöst. Vorteilhafte Weiterbildungen des erfindungsgemäßen Kraftfahrzeug-Lenkschlosses sind in den restlichen Patentansprüchen angegeben.

Nachstehend ist eine Ausführungsform des erfindungsgemäßen Lenkschlosses für Kraftfahrzeuge anhand von Zeichnungen beispielsweise beschrieben. Darin zeigt :
Fig. 1 den Längsschnitt eines elektronischen Kraftfahrzeug-Lenkschlosses entlang der Linie I-I in Fig. 2 in anderem Maßstab, wobei der Rotor in seiner Ausgangsstellung im Stator verriegelt ist, das Sperrglied sich in seiner Lenkspindel-Sperrstellung befindet und der elektronische Schlüssel abgezogen worden ist;
Fig. 2 den Querschnitt entlang der Linie II - II in Fig. 1 in anderem Maßstab;
Fig. 3 den Querschnitt entlang der Linie III - III in Fig. 1 im Maßstab von Fig. 2;

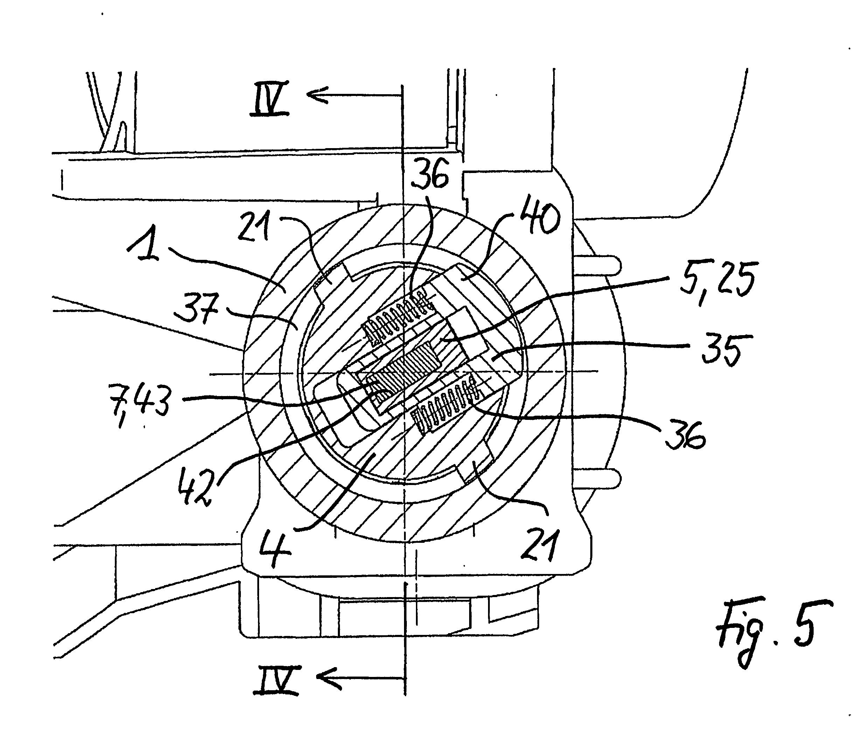

Fig. 4 den Längsschnitt entlang der Linie IV - IV in Fig. 5 im Maßstab von Fig. 1, wobei der elektronische Schlüssel steckt, der Rotor gegenüber seiner Ausgangsstellung um einen Winkel von 60° im Uhrzeigersinn gedreht ist und das Sperrglied seine Lenkspindel-Freigabestellung einnimmt;
Fig. 5 den Querschnitt entlang der Linie V - V in Fig. 4 im Maßstab von Fig. 2 und 3;

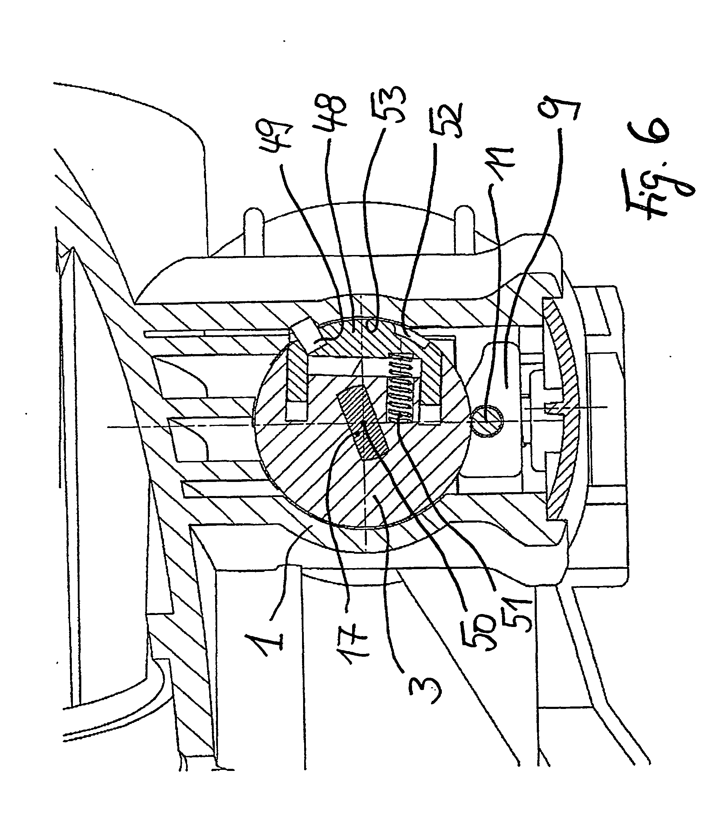

Fig. 6 den Querschnitt entlang der Linie VI - VI in Fig. 4 im Maßstab von Fig. 2, 3 und 5;
Fig. 7 den Längsschnitt gemäß Fig. 4, wobei der Rotor entgegen dem Uhrzeigersinn in eine Stellung zurückgedreht worden ist, welche um einen Drehwinkel von 25° vor der Ausgangsstellung des Rotors liegt;

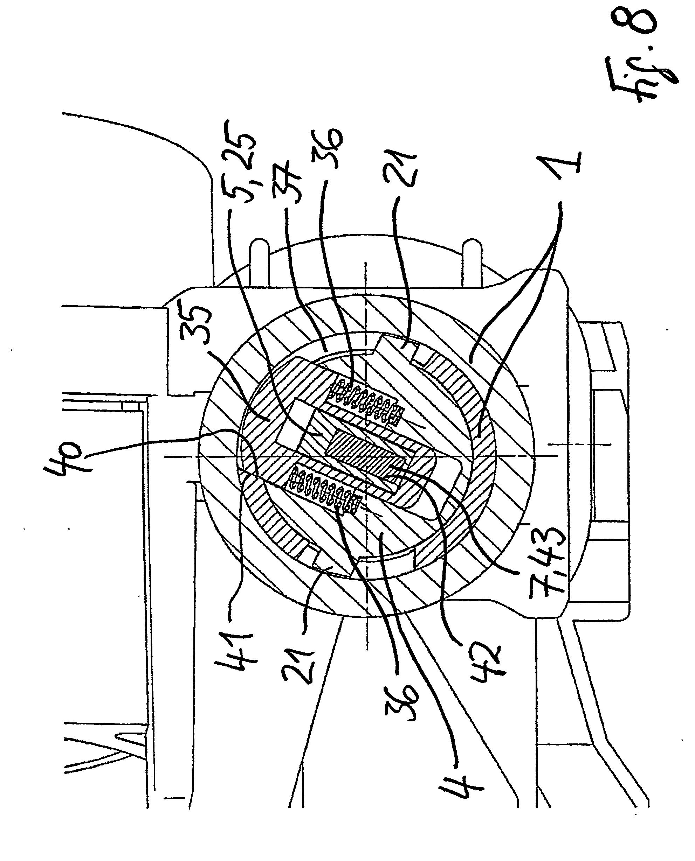

Fig. 8 den Querschnitt entlang der Linie VIII - VIII in Fig. 7 im Maßstab von Fig. 2, 3, 5 und 6.

Das dargestellte elektronische Lenkschloß für Kraftfahrzeuge weist einen Stator 1, ein Sperrglied 2, ein Steuerglied 3, einen Rotor 4, ein Betätigungsglied 5 und einen Elektromagneten 6 auf und ist mittels eines elektronischen Schlüssels 7 entriegelbar.

Der Stator 1 ist als Gehäuse für das Sperrglied 2, das Steuerglied 3, den Rotor 4, das Betätigungsglied 5 und den Elektromagneten 6 ausgebildet und wird mittels eines hülsenförmigen Abschnitts 8 an einem nicht gezeigten Mantelrohr des jeweiligen Kraftfahrzeugs befestigt, welches die ebenfalls nicht gezeigte Lenkspindel des Kraftfahrzeugs umschließt, mit der das Sperrglied 2 zusammenwirkt, um sie gegen Drehen zu sperren. Der hülsenförmige Abschnitt 8 des Stators 1 kommt an der äußeren Oberfläche des Mantelrohres zur Anlage.

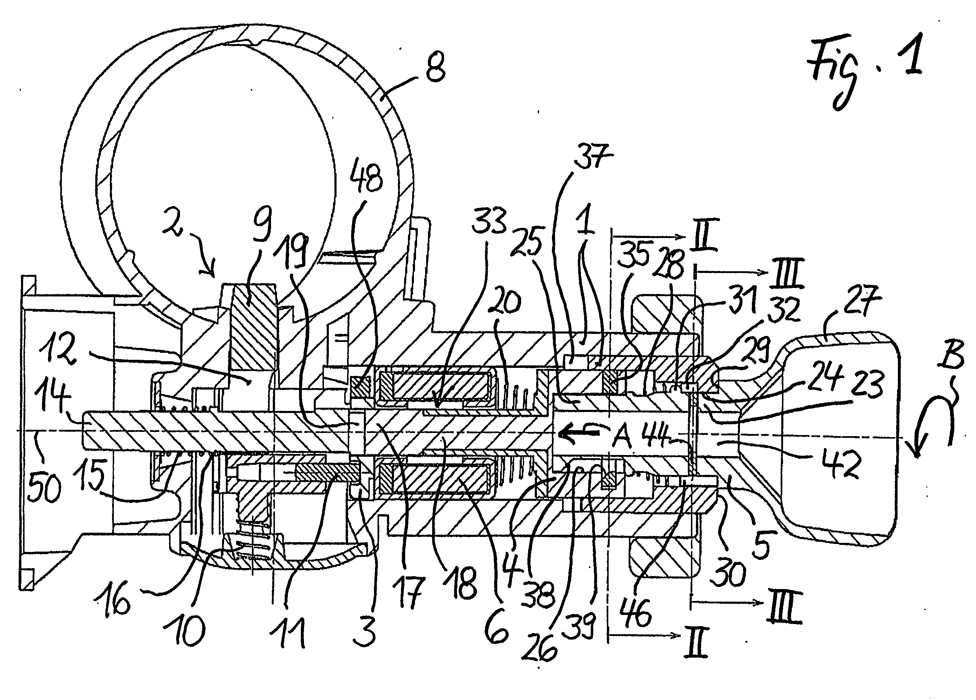

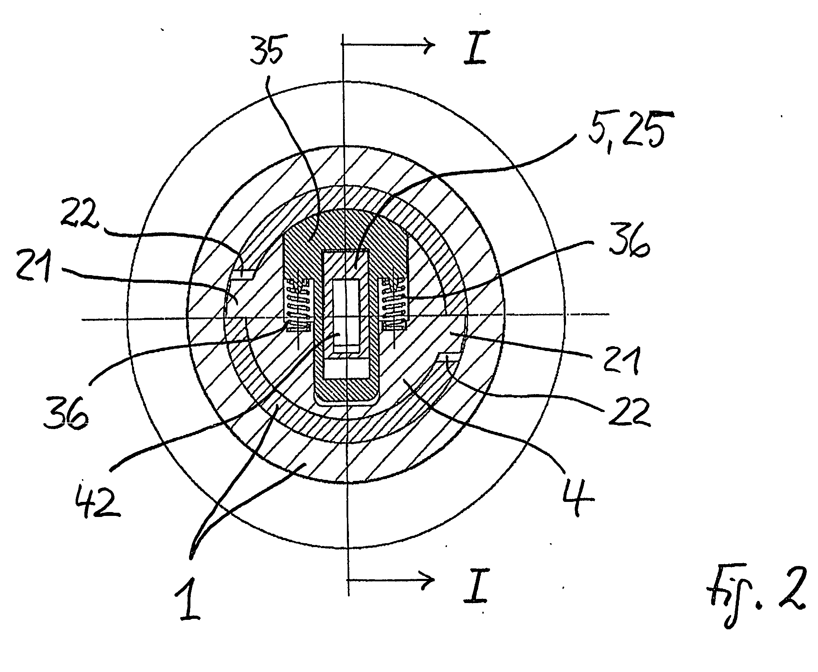

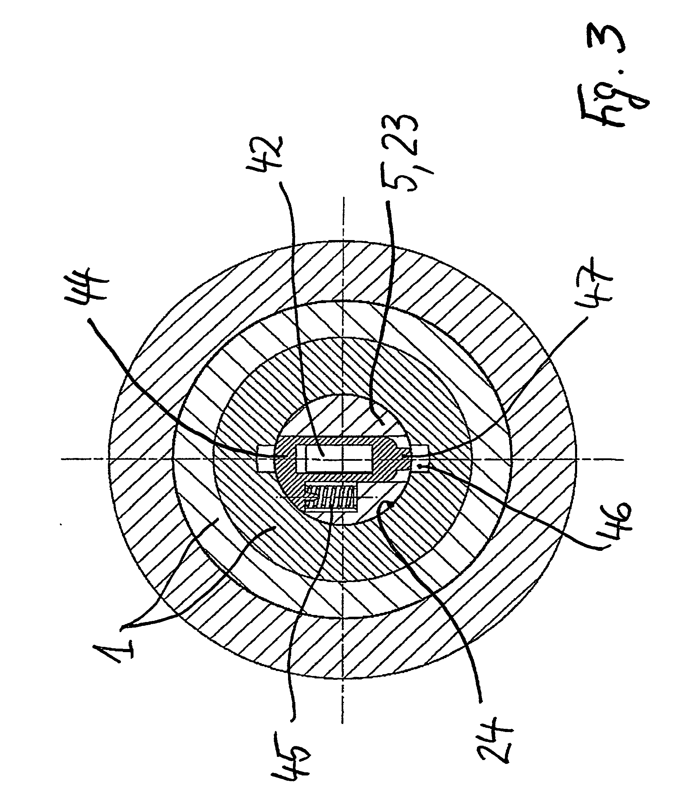

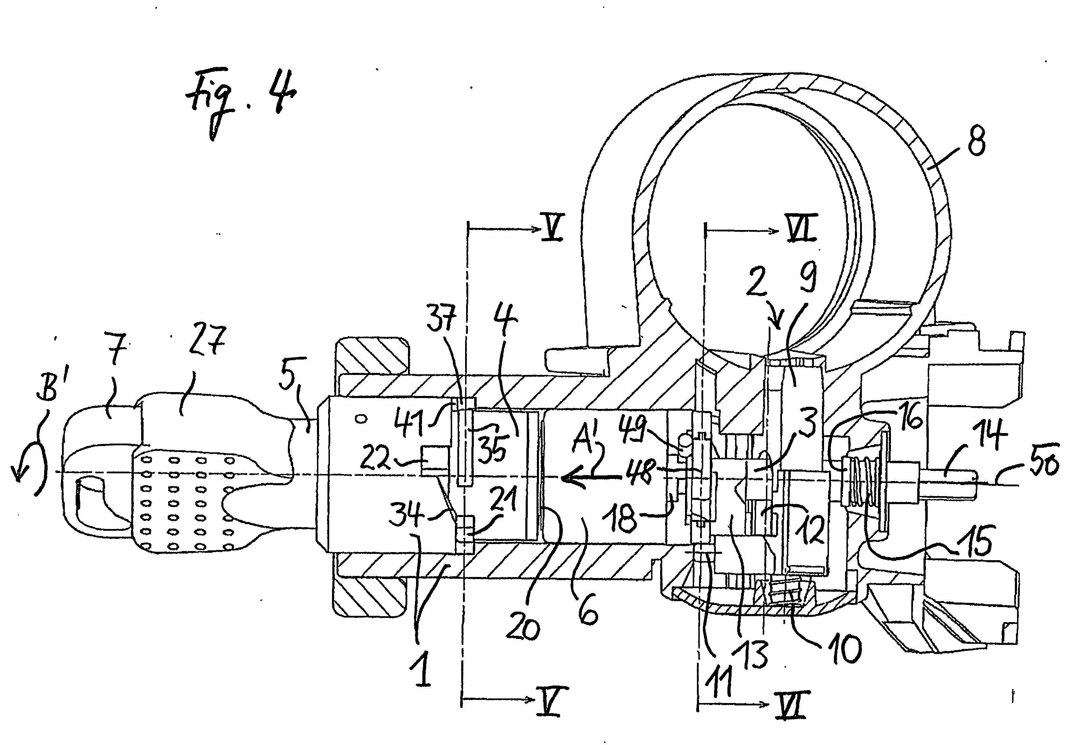

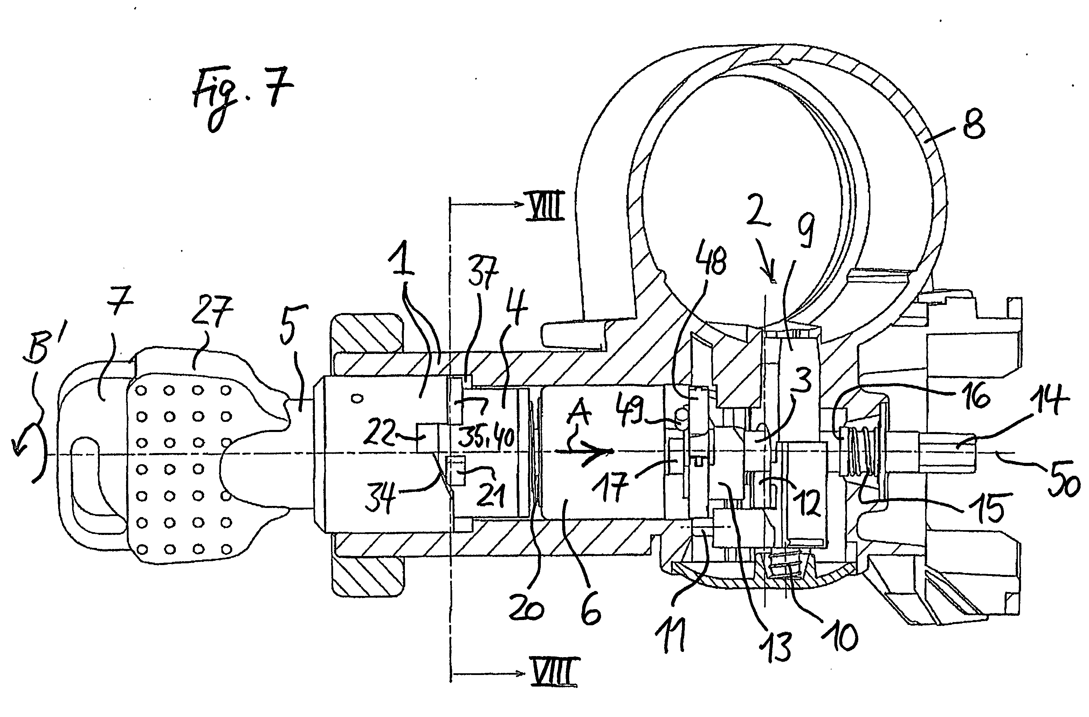

Das Sperrglied 2 ist von einem Sperrbolzen 9 gebildet, welcher sich senkrecht zur Kraftfahrzeug-Lenkspindel erstreckt und im Stator 1 axial verschieblich gelagert ist. Der Sperrbolzen 9 ist durch eine Schraubendruckfeder 10, welche sich einerseits am Stator 1 und andererseits am Sperrbolzen 9 abstützt, in Richtung auf die Lenkspindel in die Lenkspindel-Sperrstellung gemäß Fig. 1 belastet und mittels des Steuergliedes 3 entgegen der Wirkung der Schraubendruckfeder 10 von der Lenkspindel weg in die Lenkspindel-Freigabestellung nach Fig. 4, 7 bewegbar. Der Sperrbolzen 9 weist ein stiftförmiges Sicherungsglied 11 auf, welches mit dem Steuerglied 3 zusammenwirkt, um den Sperrbolzen 9 in der Lenkspindel-Freigabestellung entgegen der Wirkung der Schraubendruckfeder 10 abzustützen, und welches senkrecht zur Längsachse des Sperrbolzens 9 axial verschieblich sowie durch eine nicht gezeigte Schraubendruckfeder aus dem Sperrbolzen 9 heraus in Richtung auf das Steuerglied 3 belastet ist.

Das Steuerglied 3 ist stabförmig ausgebildet, erstreckt sich quer zum Sperrbolzen 9 durch eine Öffnung 12 desselben hindurch, weist an dem dem Sicherungsglied 11 des Sperrbolzens 9 benachbarten Ende einen Exzenter 13 zur Bewegung des Sperrbolzens 9 auf und wirkt am anderen Ende 14 mit einem nicht gezeigten Zündanlaßschalter zusammen. Das Steuerglied 3 ist im Stator 1 aus der Drehstellung gemäß Fig. 1 im Uhrzeigersinn über die Drehstellung nach Fig. 4 hinaus und zurück in die Drehstellung gemäß Fig. 1 drehbar sowie zwischen der Axialstellung gemäß Fig. 1 und der Axialstellung nach Fig. 4, 7 axial hin- und herbeweglich. Es ist durch eine Schraubendruckfeder 15 mit dem Exzenter 13 vom Sperrbolzen 9 weg belastet, welche das stabförmige Steuerglied 3 auf der dem Exzenter 13 abgewandten Seite des Sperrbolzens 9 umschließt und sich einerseits am Stator 1 sowie andererseits an einem Ringwulst 16 des Steuergliedes 3 abstützt.

Der Rotor 4 wirkt mit dem Steuerglied 3 zusammen, um dasselbe zu drehen und axial zu bewegen. Er ist im Stator 1 koaxial zum Steuerglied 3 angeordnet und drehbar sowie axial verschieblich gelagert und greift mit dem freien Ende 17 unrunden Querschnitts einer stabförmigen axialen Verlängerung 18 in ein Sackloch 19 entsprechender Querschnittsgestalt des Steuergliedes 3 ein, welches an dem mit dem Exzenter 13 versehenen Ende des Steuerglieds 3 vorgesehen ist.

Der Rotor 4 ist im Stator 1 aus der Ausgangsstellung gemäß Fig. 1 im Uhrzeigersinn über die Drehstellung nach Fig. 4 hinaus und zurück in die Ausgangsstellung gemäß Fig. 1 drehbar sowie zwischen der Axialstellung gemäß Fig. 1 und der Axialstellung nach Fig. 4 axial hin- und herbeweglich. In seiner Ausgangsstellung ist der Rotor 4 unter der Wirkung einer Schraubendruckfeder 20 mit dem Stator 1 formschlüssig kuppelbar, so daß er nicht gedreht werden kann. Dazu weist der Rotor 4 zwei einander diametral gegenüberliegende, radial abstehende Kuppelnasen 21 zum Eingriff in zwei einander diametral gegenüberliegende, axiale Kuppelnuten 22 des Stators 1 auf.

Das Betätigungsglied 5 dient dazu, den Rotor 4 von Hand zu drehen und seine Axialverschiebung durch die Schraubendruckfeder 20 in seine Kuppelstellung mit dem Stator 1, in welcher die Kuppelnasen 21 des Rotors 4 in die Kuppelnuten 22 des Stators 1 eingreifen, auszulösen. Das Betätigungsglied 5 ist mit einem mittleren zylindrischen Abschnitt 23 in einer Bohrung 24 des Stators 1 drehbar und axial verschieblich gelagert, greift mit seinem inneren Ende 25 unrunden Querschnitts in ein Sackloch 26 entsprechender Querschnittsgestalt des Rotors 4 ein und weist einen äußeren Handgriff 27 auf. Das Betätigungsglied 5 ist durch eine Schraubendruckfeder 28 belastet, so daß es mit einer äußeren Schulter 29 an einer äußeren Stirnfläche 30 des Stators 1 anliegt, und mit einem radial abstehenden Vorsprung 31 versehen, welcher in der Ausgangsstellung des Rotors 4 im Stator 1 mit einer axialen Nut 32 des Stators 1 fluchtet, in welche der Vorsprung 31 eintreten kann, so daß das Betätigungsglied 5 nur in der Ausgangsstellung des Rotors 4 entgegen der Wirkung der Schraubendruckfeder 28 im Stator 1 axial verschoben werden kann. Die Schraubendruckfeder 28 umschließt das Betätigungsglied 5 innerhalb des Stators 1 und stützt sich einerseits am Stator 1 sowie andererseits am Betätigungsglied 5 ab.

Der Elektromagnet 6 wirkt mit dem Rotor 4 zusammen, um den Rotor 4 entgegen der Wirkung der Schraubendruckfeder 20 im Stator 1 axial zu verschieben, wenn der Elektromagnet 6 erregt wird. Der Elektromagnet 6 ist im Stator 1 koaxial zum Steuerglied 3 und zum Rotor 4 angeordnet, und zwar zwischen dem Steuerglied 3 und dem Rotor 4. Der Elektromagnet 6 weist einen durchgehenden, axial beweglichen Anker 33 auf, welcher von der axialen Verlängerung 18 des Rotors 4 gebildet und von der Schraubendruckfeder 20 umschlossen ist, die sich einerseits am Elektromagneten 6 und andererseits am Rotor 4 abstützt.

Der Rotor 4 wird im Stator 1 beim Herausdrehen aus seiner Ausgangsstellung zugleich entgegen der Wirkung der Schraubendruckfeder 20 in Richtung auf den Elektromagneten 6 axial verschoben. Dazu ist der Stator 1 mit zwei einander diametral gegenüberliegenden, schraubenlinienförmigen Steuerbahnen 34 versehen, mit denen die beiden Kuppelnasen 21 des Rotors 4 als Steuernasen zusammenwirken und welche sich an die beiden Kuppelnuten 22 des Stators 1 anschließen.

Der Rotor 4 weist einen rahmenförmigen Querschieber 35 auf, welcher durch zwei seitliche Schraubendruckfedern 36 belastet ist. Die Schraubendruckfedern 36 verschieben den Querschieber 35 nach der besagten Axialverschiebung des Rotors 4, so daß der Querschieber 35 in eine innere Ringnut 37 des Stators 1 eingreift und den Rotor 4 entgegen der Wirkung der Schraubendruckfeder 20 im Stator 1 abstützt, wenn der Rotor 4 in seine Ausgangsstellung im Stator 1 zurückgedreht wird. Das Betätigungsglied 5 erstreckt sich mit seinem inneren Ende 25 durch den rahmenförmigem Querschieber 35 hindurch, welches über eine Schrägfläche 38 mit einer Schrägfläche 39 des Querschiebers 35 zusammenwirkt, um den Querschieber 35 entgegen der Wirkung der Schraubendruckfedern 36 aus der inneren Ringnut 37 des Stators 1 herauszuziehen, wenn das Betätigungsglied 5 im Stator 1 entgegen der Wirkung der Schraubendruckfeder 28 axial verschoben wird und das Ende 25 des Betätigungsgliedes 5 sich dementsprechend im Sackloch 26 des Rotors 4 axial verschiebt.

Beim Rückdrehen des Rotors 4 in seine Ausgangsstellung im Stator 1 wirkt das aus dem Rotor 4 vorstehende Ende des Querschiebers 35 als Anschlag 40, welcher an einem Anschlag 41 des Stators 1 zur Anlage kommt, bevor der Rotor 4 die Ausgangsstellung erreicht, so daß der Rotor 4 nicht in die Ausgangsstellung weitergedreht werden kann. Dieses ist erst möglich, ebenso wie das Herausdrehen des Rotors 4 aus der Ausgangsstellung, nachdem der Elektromagnet 6 erregt worden ist und den Rotor 4 im Stator 1 entgegen der Wirkung der Schraubendruckfeder 20 axial verschoben hat.

Das Betätigungsglied 5 weist einen axialen Schlüsselkanal 42 zur Aufnahme des Schaftes 43 des elektronischen Schlüssels 7 auf, der nur in der Ausgangsstellung des Rotors 4 im Stator 1 aus dem Betätigungsglied 5 abziehbar ist. Dazu ist das Betätigungsglied 5 im Bereich seines zylindrischen Abschnitts 23 mit einem rahmenförmigen Querschieber 44 versehen, welcher von dem in den Schlüsselkanal 42 eingeführten Schaft 43 durchgriffen und durch eine seitliche Schraubendruckfeder 45 in eine nicht gezeigte Kerbe des Schaftes 43 gedrückt wird und welcher in der Ausgangsstellung des Rotors 4 mit einer radialen Ausnehmung 46 des Stators 1 fluchtet, so daß der Querschieber 44 sich entgegen der Wirkung der Schraubendruckfeder 45 verschieben kann, um die Kerbe des Schaftes 43 des elektronischen Schlüssels 7 zu verlassen und mit einem Ende 47 in die radiale Ausnehmung 46 des Stators 1 einzutreten.

Das Steuerglied 3 wirkt am hinteren, zündanlaßschalterseitigen Ende 14 auch noch mit einem nicht gezeigten Schalter zur Aktivierung eines ebenfalls nicht gezeigten Alarmsignalgebers zusammen, um den Schalter zu öffnen, wenn das Steuerglied 3 die Axialstellung gemäß Fig. 1 einnimmt.

Das Steuerglied 3 weist ein Stützglied 48 auf, welches mit einem inneren Vorsprung 49 des Stators 1 zusammenwirkt, um das Steuerglied 3 entgegen der Wirkung der Schraubendruckfeder 15 abzustützen, wenn der Rotor 4 mit dem vom vorstehenden Ende seines Querschiebers 35 gebildeten Anschlag 40 am Anschlag 41 des Stators 1 zur Anlage kommt, so daß der Elektromagnet 6 bei seiner anschließenden Erregung nicht gegen die Kraft der Schraubendruckfeder 15 arbeiten muß, sondern nur gegen die Kraft der schwächeren Schraubendruckfeder 20, welche den Rotor 4 belastet. Das Stützglied 48 ist bügelförmig ausgebildet, im Steuerglied 3 senkrecht zu dessen Drehachse 50 verschieblich gelagert, durch eine Schraubendruckfeder 51 von der Drehachse 50 weg belastet und mit einer Schrägfläche 52 versehen, welche sich in der Ausgangsstellung des Rotors 4 im Stator 1 vor dem Vorsprung 49 des Stators 1 befindet und von der dem Elektromagneten 6 zugewandten Seite des Stützgliedes 48 zur anderen Seite desselben hin bis zu dessen kreisbogenförmiger Außenfläche 53 ansteigt.

Das dargestellte elektronische Lenkschloß für Kraftfahrzeuge funktioniert folgendermaßen.

Im Zustand nach Fig. 1 des elektronischen Kraftfahrzeug-Lenkschlosses befindet sich der Sperrbolzen 9 in der Lenkspindel-Sperrstellung, so daß die Lenkspindel des mit dem elektronischen Lenkschloß versehenen Kraftfahrzeugs nicht gedreht werden kann. Der Rotor 4 ist in seiner Ausgangsstellung im Stator 1 verriegelt, so daß er ebenfalls nicht gedreht werden kann, weil seine beiden Kuppelnasen 21 in die beiden Kuppelnuten 22 des Stators 1 eingreifen. Der elektronische Schlüssel 7 ist aus dem Betätigungsglied 5 abgezogen.

Um den Sperrbolzen 9 in seine Lenkspindel-Freigabestellung zu bewegen, in welcher die Kraftfahrzeug-Lenkspindel gedreht werden kann, wird der elektronische Schlüssel 7 mit seinem Schaft 43 in den Schlüsselkanal 42 des Betätigungsgliedes 5 eingeführt. Danach gibt eine nicht gezeigte Steuereinheit, die am Stator 1 vorgesehen ist, ein Abfragesignal an einen ebenfalls nicht gezeigten Transponder des elektronischen Schlüssels 7 ab, auf welches der Transponder mit einem Identifizierungssignal antwortet. Das Identifizierungssignal wird von der Steuereinheit auf seine Richtigkeit überprüft. Wenn als richtig festgestellt, bewirkt die Steuereinheit die Erregung des Elektromagneten 6, so daß dessen den Anker 33 umgebende, ringförmige Spule von elektrischem Strom durchflossen wird und der Elektromagnet 6 den Rotor 4 entgegen der Wirkung seiner Schraubendruckfeder 20 in Richtung des Pfeils A in Fig. 1 bewegt. Dabei verlassen die Kuppelnasen 21 des Rotors 4 die Kuppelnuten 22 des Stators 1, so daß der Rotor 4 im Stator 1 gedreht werden kann.

Anschließend wird der entriegelte Rotor 4 aus seiner Ausgangsstellung im Stator 1 gemeinsam mit dem Steuerglied 3 mit Hilfe des Betätigungsgliedes 5 in Richtung des Pfeils B in Fig. 1 gedreht, um den Sperrbolzen 9 entgegen der Wirkung seiner Schraubendruckfeder 10 mittels des Exzenters 13 des Steuergliedes 3 in seine Lenkspindel-Freigabestellung zu bewegen und mit dem hinteren Ende 14 des Steuergliedes 3 den in das Lenkschloß eingebauten Zündanlaßschalter zu betätigen. Dabei gleiten die Kuppelnasen 21 des Rotors 4 an den Steuerbahnen 34 des Stators 1 entlang, so daß der Rotor 4 und das Steuerglied 3 sich gemeinsam entgegen der Wirkung der Schraubendruckfedern 20, 15 in Richtung des Pfeils A in Fig. 1 in die Axialstellung gemäß Fig. 4 bewegen, in welcher der Querschieber 35 des Rotors 4 unter der Wirkung seiner Schraubendruckfedern 36 zur Abstützung des Rotors 4 entgegen der Wirkung seiner Schraubendruckfeder 20 am Stator 1 in dessen innere Ringnut 37 einfällt, das Stützglied 48 des Steuergliedes 3 unter der Wirkung seiner Schraubendruckfeder 51 zur Abstützung des Steuergliedes 3 entgegen der Wirkung seiner Schraubendruckfeder 15 am Stator 1 vor dessen inneren Vorsprung 49 auf der dem Elektromagneten 6 abgewandten Seite springt und das Sicherungsglied 11 des Sperrbolzens 9 unter der Wirkung seiner Federbelastung aus dem Sperrbolzen 9 vorspringt, um das Steuerglied 3 zur Abstützung des Sperrbolzens 9 entgegen der Wirkung seiner Schraubendruckfeder 10 in seiner Lenkspindel-Freigabestellung zu übergreifen.

Um den Sperrbolzen 9 wieder in die Lenkspindel-Sperrstellung gelangen zu lassen, werden der Rotor 4 und das Steuerglied 3 aus der gemeinsamen Drehstellung gemäß Fig. 4, in welcher die Zündanlage des Kraftfahrzeugs mittels des Zündanlaßschalters eingeschaltet ist und der Kraftfahrzeug-Motor läuft, nachdem sein Anlasser durch gemeinsames Drehen des Rotors 4 und des Steuergliedes 3 in Richtung des Pfeils B in Fig. 1 über die Drehstellung nach Fig. 4 hinaus mittels des Zündanlaßschalters aktiviert worden ist, in Richtung des Pfeils B' in Fig. 4 mit Hilfe des Betätigungsgliedes 5 in die gemeinsame Ausgangsstellung gemäß Fig. 1 zurückgedreht. Dabei verhindert der in die innere Ringnut 37 des Stators 1 eingreifende Querschieber 35 des Rotors 4, daß dessen Kuppelnasen 21 an den Steuerbahnen 34 des Stators 1 entlanggleiten und in die Kuppelnuten 22 des Stators 1 hineinlaufen, entfernt sich der Exzenter 13 des Steuergliedes 3 vom Sperrbolzen 9, so daß der Sperrbolzen 9 nur noch über das Sicherungsglied 11 am Steuerglied 3 abgestützt ist, und schaltet der Zündanlaßschalter die Kraftfahrzeug-Zündanlage ab, so daß der Kraffahrzeug-Motor zum Stillstand kommt.

Anschließend wird am Betätigungsglied 5 gezogen, so daß es sich im Stator 1 entgegen der Wirkung der Schraubendruckfeder 28 aus der Axialstellung gemäß Fig. 1 bewegt, um einerseits mit dem äußeren Radialvorsprung 31 in die innere Axialnut 32 des Stators 1 einzutreten und um andererseits mit der Schrägfläche 38 an der Schrägfläche 39 des Querschiebers 35 des Rotors 4 entlang zu gleiten und den Querschieber 35 entgegen der Wirkung seiner Schraubendruckfedern 36 aus der inneren Ringnut 37 des Stators 1 herauszuziehen. Das hat zur Folge, daß die Schraubendruckfeder 15 das Steuerglied 3 und die Schraubendruckfeder 20 den Rotor 4 im Stator 1 aus der gemeinsamen Axialstellung nach Fig. 4 in Richtung des Pfeils A' in die jeweilige Axialstellung gemäß Fig. 1 bewegen.

Dabei öffnet das Steuerglied 3 mit seinem hinteren, zündanlaßschalterseitigen Ende 14 den zugehörigen Alarmsignalgeberaktivierungsschalter, so daß die Fahrertür des Kraftfahrzeugs geöffnet werden kann, ohne daß der Geber ein optisches und / oder akustisches Alarmsignal erzeugt, und läuft das Steuerglied 3 unter dem Sicherungsglied 11 des Sperrbolzens 9 weg, so daß die Schraubendruckfeder 10 den Sperrbolzen 9 in seine Lenkspindel-Sperrstellung schieben kann. Das Stützglied 48 des am Elektromagneten 6 zur Anlage kommenden Steuergliedes 3 gleitet mit seiner Schrägfläche 52 am freien Ende des inneren Vorsprungs 49 des Stators 1 entlang, um entgegen der Wirkung der Schraubendruckfeder 51 in Richtung auf die Drehachse 50 des Steuergliedes 3 gedrückt zu werden, so daß das freie Ende des Vorsprungs 49 an der kreisbogenförmigen Außenfläche 53 des Stützgliedes 48 entlanglaufen kann. Die Kuppelnasen 21 des Rotors 4 kommen mit den Kuppelnuten 22 des Stators 1 in Eingriff, so daß der Rotor 4 im Stator 1 nicht mehr gedreht werden kann und verriegelt ist.

Schließlich wird der elektronische Zündschlüssel 7 aus dem Betätigungsglied 5 abgezogen, wobei der Querschieber 44 des Betätigungsgliedes 5 entgegen der Wirkung seiner Schraubendruckfeder 45 verschoben wird, um mit seinem Ende 47 in die radiale Ausnehmung 46 des Stators 1 einzutreten und die Ausnehmung 46 wieder zu verlassen, wenn der Schaft 43 des elektronischen Schlüssels 7 den Querschieber 44 verlassen hat und der Querschieber 44 unter der Wirkung der Schraubendruckfeder 45 in seine ursprüngliche Stellung im Betätigungsglied 5 zurückkehrt.

Beim Rückdrehen des Rotors 4 zusammen mit dem Steuerglied 3 in Richtung des Pfeils B' in die Ausgangsstellung kommt vor Erreichen derselben in der Drehstellung gemäß Fig. 7 das aus dem Rotor 4 vorstehende Ende des Querschiebers 35 (Anschlag 40) am inneren Anschlag 41 des Stators 1 zur Anlage, so daß der Rotor 4 nicht in die Ausgangsstellung weitergedreht werden kann. Dieses ist erst möglich, wenn das Kraftfahrzeug stillsteht und gegen Wegrollen gesichert ist, beispielsweise indem bei einem Kraftfahrzeug mit einem Schaltgetriebe die Handbremse betätigt und / oder der Rückwärtsgang eingelegt worden ist und bei einem Kraftfahrzeug mit einem automatischen Getriebe der Wählhebel in die Parkstellung " P " geschwenkt worden ist, und wenn der Elektromagnet 6 daraufhin erregt worden ist, um den Rotor 4 entgegen der Wirkung seiner Schraubendruckfeder 20 in Richtung des Pfeils A in Fig. 7 im Stator 1 soweit axial zu verschieben, daß der Anschlag 40 des Rotors 4 außer Eingriff mit dem Anschlag 41 des Stators 1 kommt. Dabei muß der Elektromagnet 6 nur die Kraft der den Rotor 4 belastenden schwächeren Schraubendruckfeder 20 überwinden und nicht auch noch die Kraft der das Steuerglied 3 belastenden stärkeren Schraubendruckfeder 15, weil das Steuerglied 3 mit seinem Stützglied 48 am inneren Vorsprung 49 des Stators 1 abgestützt ist und der Rotor 4 sich unter der Wirkung seiner Schraubendruckfeder 20 geringfügig vom Steuerglied 3 weg bewegt hat.

Der im Stator 1 koaxial zum Rotor 4 und zum Steuerglied 3 angeordnete Elektromagnet 6 ist unzugänglich, so daß eine Fremderregung sehr erschwert und die Diebstahlsicherheit des elektronischen Kraftfahrzeug-Lenkschlosses entsprechend erhöht ist. Außerdem ist mit dieser Anordnung des Elektromagneten 6 ein sehr kompakter, platzsparender Aufbau des elektronischen Lenkschlosses verbunden und ferner die Möglichkeit eröffnet, den Elektromagneten 6 sowohl zur Entriegelung des Rotors 4 mit Hilfe des richtigen elektronischen Schlüssels 7 als auch zur Entsperrung des Rotors 4 bei stillstehendem und gegen Wegrollen gesicherten Kraftfahrzeug zu benutzen.

## Patentansprüche

1. Lenkschloß für Kraftfahrzeuge mit einem Sperrglied (2) zum Sperren der Kraftfahrzeug-Lenkspindel gegen Drehen und mit einem Rotor (4), welcher zum Hin- und Herbewegen des Sperrgliedes (2) zwischen einer Lenkspindel-Sperrstellung und einer Lenkspindel-Freigabestellung in einem Stator (1) aus einer Ausgangsstellung und zurück in die Ausgangsstellung drehbar ist, wobei der Rotor (4) nur dann in die Ausgangsstellung zurückgedreht werden kann, wenn das Kraftfahrzeug stillsteht und gegen Wegrollen gesichert ist und wenn daraufhin ein am Stator (1) vorgesehener Elektromagnet (6) erregt wird, um die entsprechende Drehsperre des Rotors aufzuheben, **dadurch gekennzeichnet, daß** der Elektromagnet (6) im Stator (1) koaxial zum Rotor (4) angeordnet ist und der Rotor (4) einen Anschlag (40) aufweist, welcher beim Rückdrehen des Rotors (4) in seine Ausgangsstellung vor Erreichen derselben an einem Anschlag (41) des Stators (1) zur Anlage kommt, wobei der Rotor (4) mittels des Elektromagneten (6) entgegen der Wirkung einer Federbelastung im Stator (1) axial verschiebbar ist, um die Anschläge (40, 41) voneinander zu trennen, so daß der Rotor (4) in seine Ausgangsstellung zurückgedreht werden kann.

2. Elektronisches Lenkschloß für Kraftfahrzeuge nach Anspruch 1, welches mittels eines elektronischen Schlüssels entriegelbar ist, **dadurch gekennzeichnet, daß** der Rotor (4) in seiner Ausgangsstellung im Stator (1) unter der Wirkung seiner Federbelastung mit dem Stator (1) formschlüssig kuppelbar ist und im Stator (1) mittels des Elektromagneten (6), welcher erregt wird, wenn ein Identifizierungssignal des elektronischen Schlüssels (7) als richtig erkannt worden ist, entgegen der Wirkung der Federbelastung axial verschiebbar ist, um den gegenseitigen Eingriff des Rotors (4) und des Stators (1) aufzuheben, so daß der Rotor (4) aus der Ausgangsstellung gedreht werden und das Sperrglied (2) sich in seine Lenkspindel-Freigabestellung bewegen kann.

3. Lenkschloß nach Anspruch 2, **dadurch gekennzeichnet, daß** der Elektromagnet (6) einen durchgehenden, axial beweglichen Anker (33) aufweist, welcher von einer axialen Verlängerung (18) des Rotors (4) gebildet ist, die an ihrem freien Ende (17) mit dem Sperrglied (2) zusammenwirkt.

4. Lenkschloß nach Anspruch 3, **dadurch gekennzeichnet, daß** der Rotor (4) durch eine Schraubendruckfeder (20) in seine Kuppelstellung mit dem Stator ( 1) belastet ist, welche den Anker (33) des Elektromagneten (6) umschließt und sich einerseits am Elektromagneten (6) und andererseits am Rotor (4) abstützt.

5. Lenkschloß nach Anspruch 2, 3 oder 4, **dadurch gekennzeichnet, daß** der Rotor (4) mindestens eine radial abstehende Kuppelnase (21) aufweist, welche mit einer axialen Kuppelnut (22) des Stators (1) zusammenwirkt.

6. Lenkschloß nach Anspruch 5, **dadurch gekennzeichnet, daß** der Rotor (4) zwei einander diametral gegenüberliegende Kuppelnasen (21) aufweist, welche mit zwei einander diametral gegenüberliegenden Kuppelnuten (22) des Stators (1) zusammenwirken.

7. Lenkschloß nach einem der Ansprüche 2 bis 6, **dadurch gekennzeich-net, daß** der Rotor (4) sich im Stator (1) beim Herausdrehen aus seiner Ausgangsstellung zugleich entgegen der Wirkung seiner Federbelastung bzw. seiner Schraubendruckfeder (20) axial verschiebt und einen rahmenförmigen Querschieber (35) aufweist, welcher nach der Axialverschiebung unter der Wirkung einer Federbelastung in eine innere Ringnut (37) des Stators (1) eintritt, um den Rotor (4) entgegen der Wirkung seiner Federbelastung bzw. seiner Schraubendruckfeder (20) abzustützen, wobei der Rotor (4) mittels eines Betätigungsgliedes (5) von Hand drehbar ist, welches mit einem Ende (25) unrunden Querschnitts in ein Sackloch (26) entsprechender Querschnittsgestalt auf der dem Elektromagneten (6) abgewandten Seite des Rotors (4) eingreift und in der Ausgangsstellung des Rotors (4) bezüglich desselben entgegen der Wirkung einer Federbelastung axial verschiebbar ist, um den vom Ende (25) des Betätigungsgliedes (5) durchgriffenen Querschieber (35) über Schrägflächen (38,39) entgegen der Wirkung seiner Federbelastung aus der Ringnut (37) des Stators (1) herauszuziehen, so daß der Rotor (4) sich unter der Wirkung seiner Federbelastung bzw. seiner Schraubendruckfeder (20) axial in seine Kuppelstellung mit dem Stator (1) verschiebt und das Sperrglied (2) in seine Lenkspindel-Sperrstellung gelangen läßt.

8. Lenkschloß nach Anspruch 7, **dadurch gekennzeichnet, daß** der Rotor (4) mindestens eine radial abstehende Steuernase (21) aufweist, welche mit einer schraubenlinienförmigen Steuerbahn (34) des Stators (1) zusammenwirkt.

9. Lenkschloß nach Anspruch 8, **dadurch gekennzeichnet, daß** der Rotor (4) zwei einander diametral gegenüberliegende Steuernasen (21) aufweist, welche mit zwei einander diametral gegenüberliegenden Steuerbahnen (34) des Stators (1) zusammenwirken.

10. Lenkschloß nach Anspruch 7 in Verbindung mit Anspruch 5 oder 6, **dadurch gekennzeichnet, daß** die bzw. jede Kuppelnase (21) des Rotors (4) als Steuernase mit einer schraubenlinienförmigen Steuerbahn (34) des Stators (1) zusammenwirkt, welche an dessen Kuppelnut (22) zur Aufnahme der Kuppelnase (21) anschließt.

11. Lenkschloß nach einem der Ansprüche 7 bis 10, **dadurch gekennzeichnet, daß** das Betätigungsglied (5) durch eine Schraubendruckfeder (28) belastet ist, um mit einer äußeren Schulter (29) an einer äußeren Stirnfläche (30) des Stators (1) anzuliegen, wobei die Schraubendruckfeder (28) das Betätigungsglied (5) innerhalb des Stators (1) umschließt und sich einerseits am Stator (1) und andererseits am Betätigungsglied (5) abstützt.

12. Lenkschloß nach Anspruch 11, **dadurch gekennzeichnet, daß** das Betätigungsglied (5) einen radial abstehenden Vorsprung (31) aufweist, welcher in der Ausgangsstellung des Rotors (4) mit einer axialen Nut (32) des Stators (1) zur Aufnahme des Vorsprungs (31) fluchtet.

13. Lenkschloß nach einem der Ansprüche 7 bis 12, **dadurch gekennzeichnet, daß** das Betätigungsglied (5) einen axialen Schlüsselkanal (42) zur Aufnahme des Schaftes (43) des elektronischen Schlüssels (7) aufweist.

14. Lenkschloß nach Anspruch 13, **dadurch gekennzeichnet, daß** der elektronische Schlüssel (7) nur in der Ausgangsstellung des Rotors (4) im Stator (1) aus dem Betätigungssglied (5) abziehbar ist.

15. Lenkschloß nach Anspruch 14, **dadurch gekennzeichnet, daß** das Betätigungsglied (5) einen rahmenförmigen Querschieber (44) aufweist, welcher vom Schaft (43) des elektronischen Schlüssels (7) durchgriffen wird und mit einer Kerne des Schaftes (43) zusammenwirkt und welcher in der Ausgangsstellung des Rotors (4) mit einer radialen Ausnehmung (46) des Stators (1) zur Aufnahme eines Endes (47) des Querschiebers (44) fluchtet.

16. Lenkschloß nach einem der Ansprüche 7 bis 15, **dadurch gekenn** **zeichnet, daß** der Rotor (4) über ein drehbares und axial bewegbares Steuerglied (3) mit dem Sperrglied (2) zusammenwirkt.

17. Lenkschloß nach Anspruch 16, **dadurch gekennzeichnet, daß** das Sperrglied (2) in seine Lenkspindel-Sperrstellung federbelastet ist und ein federbelastetes Sicherungsglied (11) aufweist, welches mit dem Steuerglied (3) zusammenwirkt, um das Sperrglied (2) in seiner Lenkspindel-Freigabestellung zu halten, bis der Rotor (4) sich in seiner Ausgangsstellung unter der Wirkung seiner Federbelastung bzw. seiner Schraubendruckfeder (20) axial verschiebt.

18. Lenkschloß nach Anspruch 16 oder 17, **dadurch gekennzeichnet, daß** das Steuerglied (3) mit einem Schalter zur Aktivierung eines Alarmsignalgebers zusammenwirkt, um den Schalter bei der Axialverschiebung des Rotors (4) in seiner Ausgangsstellung unter der Wirkung seiner Federbelastung bzw. seiner Schraubendruckfeder (20) zu öffnen.

19. Lenkschloß nach Anspruch 16, 17 oder 18, **dadurch** g**ekennzeichnet, daß** das Steuerglied (3) in Richtung auf den Rotor (4) federbelastet ist und ein Stützglied (48) aufweist, welches zur Abstützung des Steuergliedes (3) entgegen der Wirkung seiner Federbelastung bei Anlage des Anschlags (40) des Rotors (4) am Anschlag (41) des Stators (1) mit einem Vorsprung (49) des Stators (1) zusammenwirkt und welches bei der Axialverschiebung des Rotors (4) in seiner Ausgangsstellung unter der Wirkung seiner Federbelastung bzw. seiner Schraubendruckfeder (20) mit einer Schrägfläche (52) am Vorsprung (49) des Stators (1) entlang gleitet und entgegen der Wirkung einer Federbelastung in Richtung auf die Drehachse (50) des Steuergliedes (3) bewegt wird.

20. Lenkschloß nach einem der Ansprüche 7 bis 19, **dadurch gekennzeichnet, daß** der mit dem Anschlag (41) des Stators (1) zusammenwirkende Anschlag (40) des Rotors (4) von dessen Querschieber (35) gebildet ist.

21. Lenkschloß nach einem der vorstehenden Ansprüche, **dadurch gekennzeichnet, daß** das Sperrglied (2) von einem senkrecht zur Lenkspindel axial verschiebbaren Sperrbolzen (9) gebildet ist.

## Claims

1. Steering lock for motor vehicles with a locking element (2) for locking the motor-vehicle steering spindle against rotation and with a rotor (4), which, in order to move the locking element (2) to and fro between a steering-spindle locked position and a steering-spindle release position, is rotatable within a stator (1) from a starting position and back into the starting position, wherein the rotor (4) can be rotated back into the starting position only if the motor vehicle is stationary and secured against driving away and if an electromagnet (6) provided on the stator (1) is then excited thereby releasing the corresponding rotational locking of the rotor,
**characterised in that**
the electromagnet (6) is arranged within the stator (1) coaxially to the rotor (4), and the rotor (4) has a stop (40), which, during the rotation of the rotor (4) back into its starting position meets a stop (41) of the stator (1) before reaching the starting position, wherein the rotor (4) is axially displaceable within the stator (1) by means of the electromagnet (6) against the force of a spring loading thereby separating the stops (40, 41) from one another, so that the rotor (4) can be rotated back into its starting position.

2. Electronic steering lock for motor vehicles according to claim 1, which can be unlocked by means of an electronic key,
**characterised in that**,
in its starting position within the stator (1), the rotor (4), under the force of its spring loading can be coupled to the stator (1) in a positive manner and is axially displaceable within the stator (1) against the force of the spring loading by means of the electromagnet (6), which is excited, when an identification signal of the electronic key (7) has been recognised as correct, thereby releasing the mutual engagement of the rotor (4) and the stator (1), so that the rotor (4) can be rotated from the starting position, and the locking element (2) can be moved into its steering-spindle release position.

3. Steering lock according to claim 2,
**characterised in that**
an axially mobile armature (33) formed by an axial extension (18) of the rotor (4), which cooperates at its free end (17) with the locking element (2), passes through the electromagnet (6).

4. Steering lock according to claim 3,
**characterised in that**
the rotor (4) is biased in its coupled position with the stator (1) by a helical compression spring (20), which encloses the armature (33) of electromagnet (6) and is supported on the one hand on the electromagnet (6) and on the other hand on the rotor (4).

5. Steering lock according to claim 2, 3 or 4,
**characterised in that**
the rotor (4) has at least one radially projecting coupling projection (21), which cooperates with an axial coupling groove (22) of the stator (1).

6. Steering lock according to claim 5,
**characterised in that**
the rotor (4) has two coupling projections (21) disposed diametrically opposite to one another, which cooperate with two coupling grooves (22) of the stator (1) disposed diametrically opposite to one another.

7. Steering lock according to any one of claims 2 to 6,
**characterised in that**,
during the rotation from its starting position within the stator (1), the rotor (4) is at the same time axially displaced against the force of its spring loading or respectively its helical compression spring (20) and has a frame-like transverse slide (35), which, after the axial displacement, engages in an inner annular groove (37) of the stator (1) under the force of a spring loading thereby supporting the rotor (4) against the force of its spring loading or respectively its helical compression spring (20), wherein the rotor (4) is manually rotatable by means of an activation element (5), which engages with one end (25) of non-round cross section in a blind borehole (26) of corresponding cross-sectional shape on the side of the rotor (4) facing away from the electromagnet (6) and, in the starting position of the rotor (4), is axially displaceable relative to the same against the force of a spring loading in order to withdraw the transverse slide (35), through which the end (25) of the activation element (5) engages, via bevels (38, 39) against the force of its spring loading and out of the annular groove (37) of the stator (1), so that the rotor (4) is axially displaced under the force of its spring loading or respectively its helical compression spring (20) into its coupling position with the stator (1) and allows the locking element (2) to adopt its steering-spindle locking position.

8. Steering lock according to claim 7,
**characterised in that**
the rotor (4) has at least one radially projecting control projection (21), which cooperates with a helical control track (34) of the stator (1).

9. Steering lock according to claim 8,
**characterised in that**
the rotor (4) has two control projections (21) disposed diametrically opposite to one another, which cooperate with two control tracks (34) of the stator (1) disposed diametrically opposite to one another.

10. Steering lock according to claim 7 in combination with claim 5 or 6,
**characterised in that**
the coupling projection (21) or each coupling projection (21) of the rotor (4) cooperates as a control projection with a helical control track (34) of the stator (1), which adjoins the coupling groove (22) of the latter in order to receive the coupling projection (21).

11. Steering lock according to any one of claims 7 to 10,
**characterised in that**
the activation element (5) is biased by a helical compression spring (28), in order to rest with an outer shoulder (29) on an outer end face (30) of the stator (1), wherein the helical compression spring (28) encloses the activation element (5) within the stator (1) and is supported on the one hand on the stator (1) and on the other hand on the activation element (5).

12. Steering lock according to claim 11,
**characterised in that**
the activation element (5) has a radially-projecting projection (31), which, in the starting position of the rotor (4), is in alignment with an axial groove (32) of the stator (1) for the accommodation of the projection (31).

13. Steering lock according to any one of claims 7 to 12,
**characterised in that**
the activation element (5) has an axial key channel (42) for the accommodation of the shaft (43) of the electronic key (7).

14. Steering lock according to claim 13,
**characterised in that**
the electronic key (7) can be withdrawn from the activation element (5) only in the starting position of the rotor (4) within the stator (1).

15. Steering lock according to claim 14,
**characterised in that**
the activation element (5) has a frame-like transverse slide (44), through which the shaft (43) of the electronic key (7) engages and which cooperates with notch of the shaft (43) and which, in the starting position of the rotor (4), is in alignment with a radial recess (46) of the stator (1) in order to receive one end (47) of the transverse slide (44).

16. Steering lock according to any one of claims 7 to 15,
**characterised in that**
the rotor (4) cooperates with the locking element (2) via a rotatable and axially mobile control element (3).

17. Steering lock according to claim 16,
**characterised in that**
the locking element (2) is biased in its steering-spindle locking position and has a spring-loaded securing element (11), which cooperates with the control element (3) in order to hold the locking element (2) in its steering-spindle release position until the rotor (4) is axially displaced in its starting position by the force of its spring loading or respectively its helical compression spring (20).

18. Steering lock according to claim 16 or 17,
**characterised in that**
the control element (3) cooperates with a switch for the activation of an alarm-signal generator in order to switch off the switch in the event of the axial displacement of the rotor (4) in its starting position by the force of its spring loading or respectively its helical compression spring (20).

19. Steering lock according to claim 16, 17 or 18,
**characterised in that**
the control element (3) is biased towards the rotor (4) and has a support element (48), which cooperates with a projection (49) of the stator (1) in order to support the control element (3) against the force of its spring loading, when the stop (40) of the rotor (4) meets the stop (41) of the stator (1), and which, in the event of the axial displacement of the rotor (4) in its starting position by the force of its spring loading or respectively its helical compression spring (20), slides with a bevel (52) along the projection (49) of the stator (1) and is moved against the force of a spring loading in the direction towards the rotational axis (50) of the control element (3).

20. Steering lock according to any one of claims 7 to 19,
**characterised in that**
the stop (40) of the rotor (4) cooperating with the stop (41) of the stator (1) is formed by its transverse slide (35).

21. Steering lock according to any one of the preceding claims,
**characterised in that**
the locking element (2) is formed by a locking pin (9) axially displaceable perpendicular to the steering spindle.

## Revendications

1. Verrou de direction pour véhicules à moteur, possédant un organe de verrouillage (2) pour le verrouillage de la colonne de direction du véhicule à moteur de manière à empêcher sa rotation, ainsi qu'un rotor (4) qui peut être tourné à partir d'une position de départ et retourné à la position de départ dans un stator (1) de manière à déplacer en va-et-vient l'organe de verrouillage (2) entre une position de verrouillage de la colonne de direction et une position de déverrouillage de la colonne de direction (1), le rotor (4) ne pouvant être retourné à la position de départ que si le véhicule est arrêté et immobilisé et si un électroaimant (6) prévu sur le stator (1) est alors excité pour lever le verrouillage en rotation du rotor, **caractérisé en ce que** l'électroaimant (6) est disposé dans le stator (1) de façon coaxiale du rotor (4) et le rotor (4) possède une butée (40) qui, lorsque le rotor (4) est retourné dans sa position de départ et avant d'avoir atteint celle-ci, vient reposer contre une butée (41) du stator (1), le rotor (4) étant axialement mobile dans le stator (1) au moyen de l'électroaimant (6) contre l'action d'une contrainte par ressort, de façon à séparer les butées (40, 41) l'une de l'autre, de telle sorte que le rotor (4) puisse être retourné vers sa position de départ.

2. Verrou de direction électronique pour véhicules à moteur selon la revendication 1, pouvant être déverrouillé au moyen d'une clé électronique, **caractérisé en ce que** le rotor (4), dans sa position de départ dans le stator (1), peut être couplé avec le stator (1) par engagement positif sous l'effet d'une contrainte par ressort, et peut coulisser axialement dans le stator (1) contre l'action de la contrainte par ressort, au moyen de l'électroaimant (6) qui est excité lorsqu'un signal d'identification de la clé électronique (7) est reconnu comme correct, pour abolir l'engagement réciproque du rotor (4) et du stator (1), de telle sorte que le rotor (4) puisse être tourné pour quitter sa position de départ et que l'organe de verrouillage (2) puisse se déplacer vers sa position de déverrouillage de la colonne de direction.

3. Verrou de direction selon la revendication 2, **caractérisé en ce que** l'électroaimant (6) présente un induit (33) traversant, mobile dans le sens axial, qui est formé par un prolongement axial (18) du rotor (4) coopérant à son extrémité libre (17) avec l'organe de verrouillage (2).

4. Verrou de direction selon la revendication 3, **caractérisé en ce que** le rotor (4) est contraint dans sa position de couplage avec le stator (1) par un ressort hélicoïdal de compression (20) qui entoure l'induit (33) de l'électroaimant (6) et s'appuie d'une part sur l'électroaimant (6) et d'autre part sur le rotor (4).

5. Verrou de direction selon la revendication 2, 3 ou 4, **caractérisé en ce que** le rotor (4) possède au moins un bec de couplage (21) faisant saillie dans le sens radial, qui coopère avec une gorge de couplage axiale (22) du stator (1).

6. Verrou de direction selon la revendication 5, **caractérisé en ce que** le rotor (4) possède deux becs de couplage (21) diamétralement opposés l'un à l'autre, qui coopèrent avec deux gorges de couplage (22) du stator (1) diamétralement opposées l'une à l'autre.

7. Verrou de direction selon l'une des revendications 2 à 6, **caractérisé en ce que** le rotor (4), simultanément se déplace axialement dans le stator (1) lorsqu'il est tourné pour quitter sa position de départ, contre l'action de la contrainte par ressort exercée sur lui ou contre l'action de son ressort hélicoïdal de compression (20), et possède une coulisse transversale (35) en forme de cadre qui entre, après le déplacement axial, sous l'effet d'une contrainte par ressort, dans une gorge annulaire intérieure (37) du stator (1), pour soutenir le rotor (4) contre l'action de la contrainte par ressort exercée sur lui ou contre l'action de son ressort hélicoïdal de compression (20), le rotor (4) pouvant être tourné à la main au moyen d'un organe d'actionnement (5) qui se met en prise par une extrémité (25) de forme non circulaire dans un trou borgne (26) ayant une section de forme correspondante, situé sur le côté du rotor (4) orienté à l'opposé de l'électroaimant (6) et pouvant être déplacé axialement contre l'action d'une contrainte par ressort par rapport au rotor (4) dans la position de départ de celui-ci pour retirer la coulisse transversale (35), traversée par l'extrémité (25) de l'organe d'actionnement (5), via des surfaces obliques (38, 39) hors de la gorge annulaire (37) du stator (1), contre l'action de la contrainte par ressort exercée sur lui, de telle sorte que le rotor (4) se déplace axialement sous l'action de la contrainte par ressort exercée sur lui ou sous l'action de son ressort hélicoïdal de compression (20) vers sa position de couplage avec le stator (1) et laisse l'organe de verrouillage (2) parvenir dans sa position de verrouillage de la colonne de direction.

8. Verrou de direction selon la revendication 7, **caractérisé en ce que** le rotor (4) possède au moins un bec de guidage (21) faisant saillie dans le sens radial, qui coopère avec une piste de guidage (34) hélicoïdale du stator (1).

9. Verrou de direction selon la revendication 8, **caractérisé en ce que** le rotor (4) possède deux becs de guidage (21) diamétralement opposés l'un à l'autre, qui coopèrent avec deux pistes de guidage (34) du stator (1) diamétralement opposées l'une à l'autre.

10. Verrou de direction selon la revendication 7 associée à la revendication 5 ou 6, **caractérisé en ce que** le ou chaque bec de couplage (21) du rotor (4) coopère, en servant de bec de guidage, avec une piste de guidage (34) hélicoïdale du stator (1) qui se raccorde à la gorge de couplage (22) de celui-ci pour recevoir le bec de couplage (21).

11. Verrou de direction selon l'une des revendications 7 à 10, **caractérisé en ce que** l'organe d'actionnement (5) est contraint par un ressort hélicoïdal de compression (28) de façon à reposer par un épaulement extérieur (29) sur une face frontale extérieure (30) du stator (1), le ressort hélicoïdal de compression (28) entourant l'organe d'actionnement (5) à l'intérieur du stator (1) et s'appuyant d'une part sur le stator (1) et d'autre part sur l'organe d'actionnement (5).

12. Verrou de direction selon la revendication 11, **caractérisé en ce que** l'organe d'actionnement (5) possède une saillie (31) faisant saillie radialement, qui est alignée, dans la position de départ du rotor (4), avec une gorge axiale (32) du stator (1) destinée à recevoir la saillie (31).

13. Verrou de direction selon l'une des revendications 7 à 12, **caractérisé en ce que** l'organe d'actionnement (5) possède un canal de clé (42) axial destiné à recevoir la tige (43) de la clé électronique (7).

14. Verrou de direction selon la revendication 13, **caractérisé en ce que** la clé électronique (7) ne peut être retirée de l'organe d'actionnement (5) que lorsque le rotor (4) se trouve dans la position de départ dans le stator (1).

15. Verrou de direction selon la revendication 14, **caractérisé en ce que** l'organe d'actionnement (5) possède une coulisse transversale (44) en forme de cadre, qui est traversée par la tige (43) de la clé électronique (7) et coopère avec une encoche de la tige (43), et qui est alignée, dans la position de départ du rotor (4), avec un évidement radial (46) du stator (1) destiné à recevoir une extrémité (47) de la coulisse transversale (44).

16. Verrou de direction selon l'une des revendications 7 à 15, **caractérisé en ce que** le rotor (4) coopère avec l'organe de verrouillage (2) par l'intermédiaire d'un organe de commande (3) rotatif et mobile dans le sens axial.

17. Verrou de direction selon la revendication 16, **caractérisé en ce que** l'organe de verrouillage (2) est contraint par ressort dans la position de verrouillage de la colonne de direction et présente un organe de sécurité (11) contraint par ressort, qui coopère avec l'organe de commande (3) pour maintenir l'organe de verrouillage (2) dans sa position de déverrouillage de la colonne de direction, jusqu'à ce que le rotor (4), dans sa position de départ, se déplace dans le sens axial, sous l'effet de la contrainte par ressort exercée sur lui ou sous l'effet de son ressort hélicoïdal de compression (20).

18. Verrou de direction selon la revendication 16 ou 17, **caractérisé en ce que** l'organe de commande (3) coopère avec un commutateur pour l'activation d'un émetteur de signal d'alarme, afin d'ouvrir le commutateur lors du déplacement axial du rotor (4), dans sa position de départ, sous l'action de la contrainte par ressort exercée sur lui ou sous l'action de son ressort hélicoïdal de compression (20).

19. Verrou de direction selon la revendication 16, 17 ou 18, **caractérisé en ce que** l'organe de commande (3) est contraint par ressort en direction du rotor (4) et possède un élément d'appui (48) qui, pour soutenir l'organe de commande (3) contre l'action de la contrainte par ressort exercée sur lui, lorsque la butée (40) du rotor (4) repose sur la butée (41) du stator (1), coopère avec une saillie (49) du stator (1) et qui, lors du déplacement axial du rotor (4) dans la position de départ sous l'action de la contrainte par ressort exercée sur lui ou sous l'action de son ressort hélicoïdal de compression (20), glisse avec une surface oblique (52) le long de la saillie (49) du stator (1) et est déplacé, contre l'action d'une contrainte par ressort, en direction de l'axe de rotation (50) de l'organe de commande (3).

20. Verrou de direction selon l'une des revendications 7 à 19, **caractérisé en ce que** la butée (40) du rotor (4) coopérant avec la butée (41) du stator (1) est formée par la coulisse transversale (35) du rotor.

21. Verrou de direction selon l'une des revendications précédentes, **caractérisé en ce que** l'organe de verrouillage (2) est formé par un goujon de verrouillage (9) mobile dans le sens axial perpendiculairement à la colonne de direction.
